(19) Europäisches Patentamt

European Patent Office

Office européen des brevets

(11) **EP 1 232 584 B1**

(12) **EUROPÄISCHE PATENTSCHRIFT**

(45) Veröffentlichungstag und Bekanntmachung des Hinweises auf die Patenterteilung:
**10.03.2004 Patentblatt 2004/11**

(21) Anmeldenummer: **00988647.4**

(22) Anmeldetag: **24.11.2000**

(51) Int Cl.7: **H04B 7/26**, H04Q 7/38

(86) Internationale Anmeldenummer:
**PCT/DE2000/004179**

(87) Internationale Veröffentlichungsnummer:
**WO 2001/039399 (31.05.2001 Gazette 2001/22)**

(54) **VERFAHREN ZUM ABBILDEN VON FORMATKENNUNGS-BITS AUF EINEN IN EINEM KOMPRIMIERMODUS ZU SENDENDEN RAHMEN**

METHOD FOR REPRESENTING FORMAT INDICATOR BITS IN A FRAME TO BE SENT IN COMPRESSED MODE

PROCEDE PERMETTANT DE REPRESENTER DES BITS D'IDENTIFICATION DE FORMAT SUR UNE TRAME DEVANT ETRE ENVOYEE EN MODE COMPRIME

(84) Benannte Vertragsstaaten:
**DE FR GB IT**

(30) Priorität: **24.11.1999 DE 19956492**

(43) Veröffentlichungstag der Anmeldung:
**21.08.2002 Patentblatt 2002/34**

(60) Teilanmeldung:
**03027381.7**

(73) Patentinhaber: **SIEMENS AKTIENGESELLSCHAFT 80333 München (DE)**

(72) Erfinder:
  • **SENNINGER, Christian 82515 Wolfratshausen (DE)**
  • **RAAF, Bernhard 81475 München (DE)**

(56) Entgegenhaltungen:
  • **"Multiplexing and channel coding (FDD)" 3G TS 25 212 VERSION 3.0.0, Oktober 1999 (1999-10), Seiten 37-50, XP002163232**

EP 1 232 584 B1

**Beschreibung**

Die vorliegende Erfindung betrifft ein Verfahren zum Abbilden von Formatkennungs-Bits, d.h. sogenannten TFCI-Bits, auf einen zu sendenden Rahmen, insbesondere auf einen im sogenannten "Compressed Mode" zu übertragenden komprimierten Rahmen, nach dem Oberbegriff des Anspruches 1.

Die Mobilfunktechnik befindet sich in einer raschen Entwicklung. Augenblicklich wird an der Standardisierung des sogenannten UMTS-Mobilfunkstandards ('Universal Mobile Telecommunication System') für Mobilfunkgeräte der dritten Mobilfunkgeneration gearbeitet.

Über einen Mobilfunkkanal zu übertragende Informationen werden üblicherweise in Form einer vordefinierten Rahmen- und Zeitschlitzstruktur übertragen. Ein UMTS-Rahmen ("Frame") umfaßt 15 Zeitschlitze ("Slots"), wobei innerhalb jedes Rahmens neben den eigentlichen Daten auch bestimmte Systeminformationen übertragen werden. Diese Systeminformationen umfassen insbesondere eine bekannte Pilotbitfolge oder Trainingssequenz, die von dem jeweiligen Empfänger zur Schätzung der Kanalimpulsantwort des jeweiligen Mobilfunkkanals verwendet werden kann, eine Leistungsregelungsinformation in Form eines oder mehrerer TPC-Bits ("Transmit Power Control"), durch deren Inhalt die Sendeleistung des jeweiligen Empfängers gesteuert wird, sowie eine Formatkennungsinformation in Form von sogenannten TFCI-Bits ("Transport Format Combination Indicator").

Gemäß dem derzeitigen Stand der UMTS-Standardisierung (3G TS 25212 v.3.0.0 vom Oktober 1999) ist für jeden UMTS-Rahmen ein TFCI-Codewort vorgesehen, welches aus zehn zunächst uncodierten Bits besteht, die anschließend mit einem (32,10)-Subcode des Reed-Muller-Codes zweiter Ordnung codiert und somit auf insgesamt 32 Bits abgebildet werden. Von diesen 32 Bits werden anschließend im Normalmodus (im normalen Betrieb bzw im Nicht-Komprimier-Modus) die Bits Nr. 0 und Nr. 16 punktiert, so daß das TFCI-Codewort nur noch 30 TFCI-Bits umfaßt, die dann gleichmäßig mit jeweils zwei TFCI-Bits auf die einzelnen Zeitschlitze des entsprechenden UMTS-Rahmens abgebildet oder verteilt werden. Dabei erfolgt die Zuordnung derart, daß die beiden höherwertigsten TFCI-Bits des TFCI-Codeworts auf den innerhalb des UMTS-Rahmens zuerst gesendeten Zeitschlitz Nr. 0 und die beiden niederwertigsten Bits auf den innerhalb des Rahmens zuletzt gesendeten Zeitschlitz Nr. 14 aufgeteilt werden. Innerhalb der einzelnen Zeitschlitze wird dann das höherwertigere TFCI-Bit vor dem niederwertigeren TFCI-Bit gesendet. Die Abbildung oder Zuordnung der TFCI-Bits des TFCI-Codeworts auf die einzelnen Zeitschlitze eines Rahmens wird auch als "Mapping" bezeichnet.

Unter "Punktierung" versteht man im Rahmen der vorliegenden Anmeldung auch das Entfernen bzw.

Nicht-Senden bestimmter, insbesondere auch letzter, Bits.

Neben einer normalen Übertragung der Informationen in unkomprimierter Form ist für die Datenübertragung auch ein komprimierter Modus ("Compressed Mode") vorgesehen. Im "Compressed Mode" werden die Informationen des jeweiligen Rahmens in komprimierter Form übertragen, um auf diese Weise künstlich eine Übertragungslücke ("Transmission Gap") zu erzeugen, während deren Dauer die Abwesenheit von gesendeten Informationen beispielsweise für Zwischenfrequenzmessungen zur Vorbereitung von Handover-Vorgängen etc. genutzt werden kann.

Im "Compressed Mode" müssen pro Rahmen noch mindestens acht Zeitschlitze übrig bleiben. Die 30 TFCI-Bits müssen im "Compressed Mode" demzufolge auf die verbleibenden Zeitschlitze verteilt werden. Um dies zu ermöglichen, muß das Zeitschlitz-Format des Uplink-Kontrollkanals DPCCH ("Dedicated Physical Control Channel") und des Downlink-Kontrollkanals DPCCH sowie des Downlink-Datenkanals DPDCH ("Dedicated Physical Data Channel") angepaßt werden.

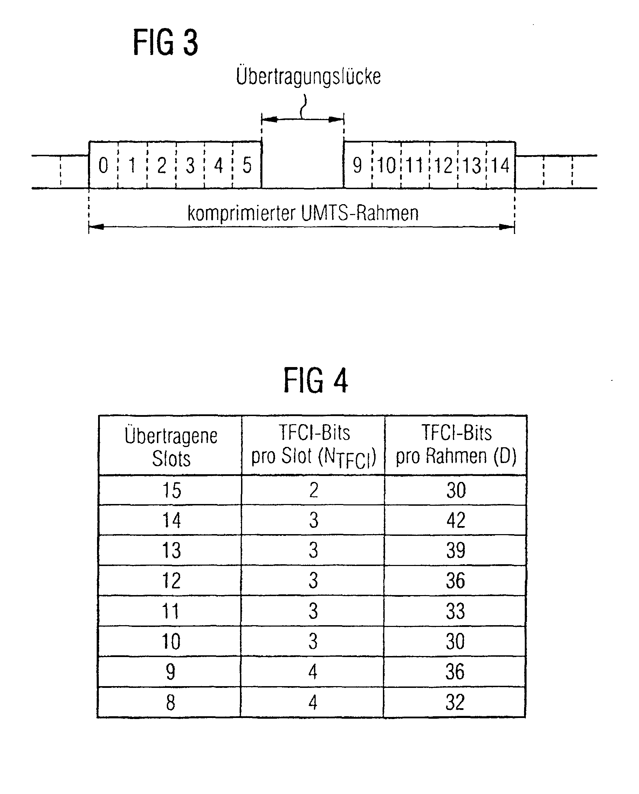

Für den Uplink-DPCCH-Kontrollkanal wurden diesbezüglich verschiedene Zeitschlitzformate für den "Compressed Mode" vorgeschlagen, die durch die in Fig. 4 gezeigte Tabelle zusammengefaßt werden können, wobei jeweils für eine unterschiedliche Anzahl der im "Compressed Mode" pro Rahmen übertragenen Zeitschlitze oder Slots die Anzahl $N_{TFCI}$ der pro Zeitschlitz, übertragenen TFCI-Bits und die Gesamtanzahl D der pro Rahmen übertragenen TFCI-Bits angegeben ist.

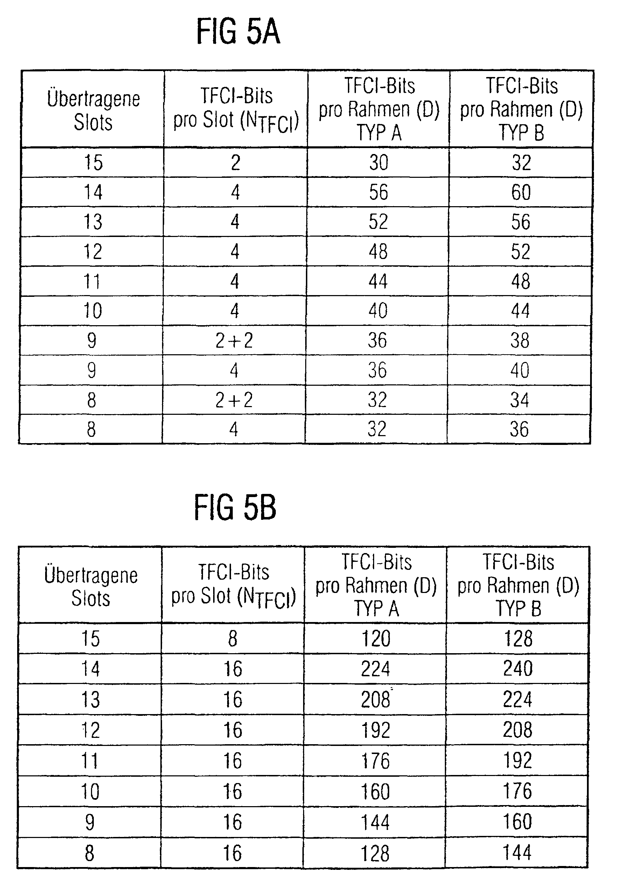

Auch für den Downlink wurden entsprechende Vorschläge für Zeitschlitzformate im "Compressed Mode" gemacht, die durch die in Fig. 5A und Fig. 5B gezeigten Tabellen zusammengefaßt werden können, wobei sich Fig. 5A auf einen für die entsprechenden Kanalisierungs- oder Spreizcodes ("Channelization Codes") verwendeten Spreizfaktor zwischen 128 und 512 bezieht, während Fig. 5B Spreizfaktoren zwischen 4 und 64 betrifft. In jeder dieser Tabellen ist analog zu Fig. 4 jeweils für eine unterschiedliche Anzahl der im "Compressed Mode" pro Rahmen übertragenen Zeitschlitze oder Slots die Anzahl $N_{TFCI}$ der pro Zeitschlitz übertragenen TFCI-Bits und die Gesamtanzahl D der pro Rahmen übertragenen TFCI-Bits angegeben, wobei in diesem Fall zudem zwischen einer Typ A- und einer Typ B-Übertragung unterschieden wird.

Da pro Rahmen ein einheitliches Zeitschlitzformat angestrebt ist, können - wie in Fig. 4 und Fig. 5A/B durch die einzelnen Werte für D dargestellt ist - Fälle auftreten, bei denen pro Rahmen mehr TFCI-Stellen zur Verfügung stehen als eigentlich für die 30 TFCI-Bits benötigt werden.

Für den Uplink, d.h. die Übertragung von einem Mobilteil zu einer Basisstation, wurde daher vorgeschlagen, ausgewählte TFCI-Bits im "Compressed Mode" zu repetieren, d.h. zu wiederholen, um die überschüssigen TFCI-Stellen aufzufüllen, wobei hierzu insbesondere die unmittelbar nach der im "Compressed Mode" auftretenden Übertragungslücke gesendeten Bits an freien TFCI-Stellen wiederholt werden, um das Repetieren möglichst effektiv zu gestalten. Der Grund hierfür beruht auf der Tatsache, daß die Sendeleistungsregelung unmittelbar nach der Übertragungslücke sehr unsicher ist, so daß unmittelbar nach der Übertragungslücke die Wahrscheinlichkeit für eine gestörte Übertragung am größten ist und daher diese Bits nach Möglichkeit wiederholt werden sollten. Die repetierten Bits. können dabei durch folgenden Algorithmus bestimmt werden, wobei $c_k$ die TFCI-Bits, $d_k$ die repetierten Bits, D die Anzahl der im Rahmen insgesamt zur Verfügung stehenden TFCI-Stellen und E den Index bzw. die Position der im "Compressed Mode" auf die Übertragungslücke unmittelbar folgenden TFCI-Stelle bezeichnet:

$$d_{D-31} = c_{E \bmod 30}$$

$$d_{D-32} = c_{(E-1) \bmod 30}$$

$$d_{D-33} = c_{(E-2) \bmod 30}$$

$$.$$
$$.$$
$$.$$

$$d_0 = c_{(E-(D-31)) \bmod 30}$$

Die Bits werden in absteigender Reihenfolge auf die einzelnen Zeitschlitze des komprimierten Rahmens aufgeteilt, wobei zunächst die TFCI-Bits $c_k$ und anschließend die repetierten Bits $d_k$ übertragen werden , d.h. das Bit $c_{29}$ ("Most Significant Bit" (MSB) des TFCI-Codeworts) wird als erstes Bit des TFCI-Codeworts übertragen, während do als letztes Bit des TFCI-Codeworts übertragen wird.

Für den Downlink, d.h. die Übertragung von einer Basisstation zu einem Mobilteil, wurde hingegen vorgeschlagen, im "Compressed Mode" die freien oder überschüssigen TFCI-Stellen mit sogenannten DTX-Bits (Discontinuous Transmission Bits) aufzufüllen. Ein DTX-Bit entspricht dabei einem Bit, welches nicht gesendet wird, d.h. einem Bit mit der Energie Null. Somit wird an den entsprechenden Stellen der betroffenen Zeitschlitze jeweils eine Sendepause mit der zeitlichen Länge eines DTX-Bits eingelegt.

Der vorliegenden Erfindung liegt ausgehend von dem zuvor beschriebenen Stand der Technik die Aufgabe zugrunde, ein Verfahren zum Abbilden von TFCI-Bits auf einen in einem Komprimiermodus zu sendenden Rahmen vorzuschlagen, womit ohne zusätzlichen Aufwand die Übertragungsleistung und Übertragungssicherheit verbessert werden kann.

Diese Aufgabe wird erfindungsgemäß durch ein Verfahren mit den Merkmalen des Anspruches 1 gelöst. Die Unteransprüche definieren jeweils vorteilhafte und bevorzugte Ausführungsformen der vorliegenden Erfindung.

Erfindungsgemäß wird vorgeschlagen, die überschüssigen TFCI-Stellen durch Repetieren der der Übertragungslücke folgenden TFCI-Bits zu besetzen, wobei jedoch diese TFCI-Bits in umgekehrter Reihenfolge repetiert werden. Diese Vorgehensweise ist sinnvoll, da davon ausgegangen werden kann, daß die TFCI-Bits, welche nach der Übertragungslücke gesendet werden, mit zunehmendem Abstand zu der Übertragungslücke eine geringere Bitfehlerrate aufweisen. Aus diesem Grund ist es besser, diejenigen TFCI-Bits, welche aufgrund ihrer Näher zu der Übertragungslücke die größte Bitfehlerrate aufweisen, in einem Zeitschlitz zu repetieren, der die größte Entfernung zu der Übertragungslücke besitzt.

Die vorliegende Erfindung beruht auf der Erkenntnis, daß im "Compressed Mode" die Leistungsregelung ("Power Control") durch die Übertragungslücke gestört wird und sich erst mit zunehmender Entfernung von der Übertragungslücke einschwingt. Aufgrund dieser Tatsache wird das Auffüllen von zusätzlichen TFCI-Stellen mit TFCI-Bits (im Uplink und/oder Downlink) oder DTX-Bits (im Downlink) optimiert. Eine Weiterbildung der Er findung beruht auf der Erkenntnis, daß es besser ist, die ehemals punktierten TFCI-Bits zu senden, als TFCI-Bits zu repetieren, welche unter schlechten "Power Control"-Bedingungen gesendet wurden.

Die Erfindung wird nachfolgend näher anhand bevorzugter Ausführungsbeispiele unter Bezugnahme auf die beigefügte Zeichnung erläutert.

Fig. 1 zeigt ein vereinfachtes Blockschaltbild einer Anordnung zum Codieren, Punktieren und Abbilden von TFCI-Bits auf einen im sogenannten "Compressed Mode" zu sendenden UMTS-Rahmen, welche in einer erfindungsgemäßen Sendevorrichtung eingesetzt werden kann,

Fig. 2 zeigt eine Darstellung zur Verdeutlichung der Abbildung der TFCI-Bits auf einen UMTS-Rahmen,

Fig. 3 zeigt eine Darstellung zur Erläuterung verschiedener den "Compressed Mode" betreffenden Ausführungsbeispiele der vorliegenden Erfindung,

Fig. 4 zeigt eine Tabelle, in der verschiedene bekannte Zeitschlitzformate für einen im "Compressed Mode" über eine Uplink-Verbindung übertragenen UMTS-Rahmen aufgelistet sind, und

Fig. 5A und 5B zeigen Tabellen, in denen verschiedene bekannte Zeitschlitzformate für einen im "Compressed Mode" über eine Downlink-Verbindung übertragenen UMTS-Rahmen aufgelistet sind.

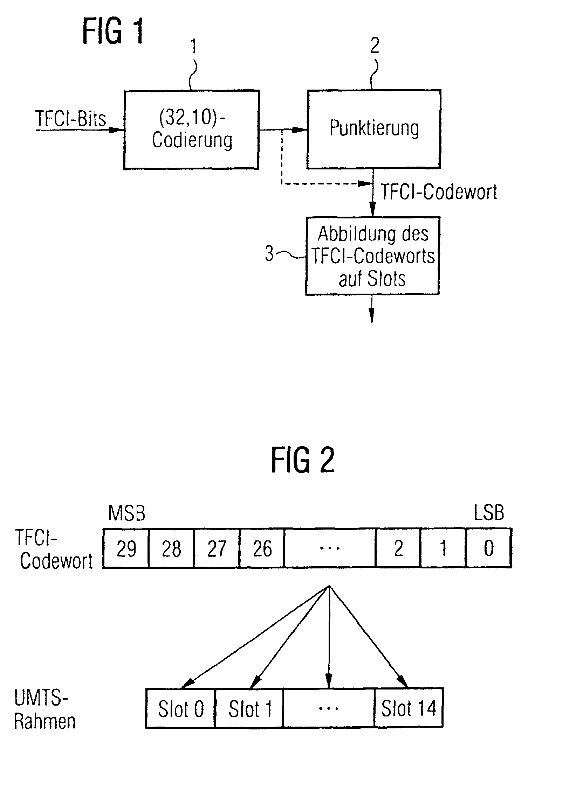

Bevor auf die verschiedenen Ausführungsbeispiele näher eingegangen wird, soll zunächst der grundlegende Aufbau einer Anordnung zum Abbilden von TFCI-Bits auf einen UMTS-Rahmen anhand Fig. 1 erläutert werden.

Einem (32,10)-Codierer 1 werden uncodierte TFCI-Bits zugeführt, welche auf den jeweiligen UMTS-Rahmen abzubilden sind. Die Anzahl der uncodierten TFCI-Bits ist im Prinzip variabel und wird zu Beginn einer Verbindung durch eine entsprechende Signalisierung festgelegt. Sind jedoch weniger als zehn uncodierte TFCI-Bits vorhanden, wird das entsprechende TFCI-Wort mit Nullen auf insgesamt zehn Bits aufgefüllt, wobei in diesem Fall die höherwertigeren Bits auf Null gesetzt werden. Auf diese Weise ist sichergestellt, daß dem (32,10)-Codierer 1 stets ein TFCI-Wort mit zehn TFCI-Bits zugeführt wird.

Der (32,10)-Codierer 1 codiert das ihm zugeführte TFCI-Wort unter Anwendung eines (32,10)-Subcodes des sogenannten Reed-Muller-Codes zweiter Ordnung. Die Struktur des entsprechenden (32, 10) -Codierers 1 ist dabei derart, daß das von dem (32,10)-Codierer 1 ausgegebene TFCI-Codewort durch eine durch: die uncodierten TFCI-Bits gesteuerte Linearkombination von zehn unterschiedlichen Basissequenzen gebildet wird.

Das von dem (32,10)-Codierer 1 ausgegebene TFCI-Codewort, welches nunmehr 32 Bits umfaßt, wird anschließend einer Punktiereinheit 2 zugeführt, in der das Bit Nr. 0 und das Bit Nr. 16 punktiert, d.h. aus dem TFCI-Codewort entfernt werden. Das daraus resultierende punktierte TFCI-Codewort umfaßt somit nur noch 30 TFCI-Bits.

Die 30 TFCI-Bits werden einer Einheit 3 zugeführt, deren Aufgabe es ist, diese Bits im "Normal Mode" (d.h. bei unkomprimierter Übertragung) oder im "Compressed Mode" (d.h. bei komprimierter Übertragung) den einzelnen Zeitschlitzen oder Slots des jeweiligen UMTS-Rahmens zuzuweisen (vgl. Fig. 2).

Wie bereits beschrieben worden ist, werden die 30 TFCI-Bits im "Normal Mode" gleichmäßig auf die 15 Zeitschlitze des jeweiligen UMTS-Rahmens aufgeteilt, wobei die beiden höchstwertigen TFCI-Bits Nr. 29 und Nr. 28 auf den zeitlich zuerst gesendeten Zeitschlitz Nr. 0 abgebildet werden, während die beiden niederwertigsten Bits Nr. 1 und Nr. 0 auf den innerhalb des Rahmens zuletzt gesendeten Zeitschlitz Nr. 14 abgebildet werden.

Natürlich lässt sich exakt die selbe Konfiguration an zu sendenden TFCI Bits auch auf andere Weise erziehlen. Beispielsweise ist die Nummerierung der Bits eine reine Frage der Konvention, MSB und LSB könnten auch in einer anderen Reihenfolge definiert werden. Des weiteren müssen die Punktierungen nicht die Bits Nr. 0 und 16 betreffen sondern es können auch andere Bits punktiert werden. Gemäß einer weiteren Darstellungsweise können die Elemente der für den Reed-Mueller Kode verwendeten Masken auch umsortiert werden, so dass die zu punktierenden Bits an beliebige Stellen, insbesondere auch ans Ende des TFCI-Codewortes gesetzt werden können. Alle diese alternativen, äquivalenten Darstellungsformen liegen ebenfalls im Rahmen der vorliegenden Erfindung, auch wenn sie im folgenden nicht explizit erwähnt werden.

Im "Compressed Mode" entsteht jedoch, wie in Fig. 3 gezeigt ist, in dem entsprechenden Rahmen eine Übertragungslücke, in der keine Informationen gesendet werden. Bei dem in Fig. 3 gezeigten Beispiel umfaßt diese Übertragungslücke die Zeitschlitze Nr. 6-8. Daraus resultiert, wie bereits beschrieben worden ist, das Erfordernis, das Zeitschlitzformat entsprechend anzupassen, was zur Folge hat, daß bei bestimmten dieser angepaßten Formate mehr TFCI-Stellen als TFCI-Bits zur Verfügung stehen (vgl. auch Fig. 4 und Fig. 5A/5B).

Nachfolgend werden sowohl für den Uplink als auch für den Downlink verschiedene Möglichkeiten für das Auffüllen dieser überschüssigen TFCI-Stellen vorgeschlagen, wobei die nachfolgend für den Uplink vorgeschlagenen Ausführungsbeispiele auch für den Downlink anwendbar sind. Zudem können die einzelnen Ausführungsbeispiele auch miteinander kombiniert werden.

Im Folgenden werden zunächst einige Ausführungsbeispiele der vorliegenden Erfindung für den Uplink erläutert.

Gemäß einem ersten Ausführungsbeispiel wird für den Fall, daß im "Compressed Mode" mehr TFCI-Stellen als TFCI-Bits zur Verfügung stehen, vorgeschlagen, die überschüssigen TFCI-Bits nicht sofort durch Repetieren zu besetzen, sondern die noch nicht besetzten TFCI-Stellen zunächst mit den von der Punktiereinheit 2 ursprünglich punktierten Bits Nr. 0 und Nr. 16 des ursprünglichen TFCI-Codeworts zu besetzen. Diese beiden Bits werden vorzugsweise an das Ende des entsprechenden UMTS-Rahmens gesetzt. Erst nachdem diese Bits auf den UMTS-Rahmen abgebildet worden sind, werden die dann noch verbleibenden freien TFCI-Stellen durch Repetieren aufgefüllt, wobei dies analog zum eingangs beschriebenen Stand der Technik derart erfolgt, daß die 30 Bits des TFCI-Codeworts auf die zeitlich zuerst gesendeten TFCI-Stellen abgebildet werden, während die repetierten Bits den späteren TFCI-Stellen des Rahmens zugeordnet werden.

Durch diese Vorgehensweise verändert sich der zuvor vorgestellte Algorithmus für die Bestimmung der zusätzlichen TFCI-Bits $d_k$ wie folgt, wobei E den Index der der Übertragungslücke unmittelbar folgende TFCI-Stelle, $c_k$ mit k = 0...29 die 30 TFCI-Bits des punktierten TFCI-Codeworts, $c_{30}$ und $c_{31}$ die beiden ursprünglich punktierten Bits Nr. 0 und Nr. 16 des von dem Codierer 1 ausgegebenen TFCI-Codeworts und D die Anzahl der TFCI-Stellen im gesamten Rahmen bezeichnet:

$$d_{D-31} = c_{E \bmod 30}$$

$$d_{D-32} = c_{(E-1) \bmod 30}$$

$$d_{D-33} = c_{(E-2) \bmod 30}$$

$$\cdot$$

$$\cdot$$

$$\cdot$$

$$d_2 = c_{(E-(D-33)) \bmod 30}$$

$$d_1 = c_{31}$$

$$d_0 = c_{30}$$

Bei dem in Fig. 3 gezeigten Beispiel ergibt sich für die Abbildung der TFCI-Bits auf den jeweiligen Rahmen folgende Vorgehensweise. Da die Übertragungslücke drei Zeitschlitze umfaßt, werden lediglich zwölf Zeitschlitze gesendet, so daß gemäß der in Fig. 4 gezeigten Tabelle drei TFCI-Bits pro Zeitschlitz und insgesamt 36 TFCI-Bits in dem gesamten Rahmen übertragen werden sollen.

Gemäß dem zuvor beschriebenen Algorithmus werden zunächst die TFCI-Bits $c_{29}$ bis $c_{12}$ auf die ersten Zeitschlitze Nr. 0 bis Nr. 5 und die TFCI-Bits $c_{11}$ bis $c_0$ auf die nächsten Zeitschlitze Nr. 9 bis Nr. 12 verteilt. Nachdem somit alle TFCI-Bits des punktierten TFCI-Codeworts aufgeteilt worden sind, werden die TFCI-Bits $c_{11}$, $c_{10}$, $c_{09}$ im Zeitschlitz Nr. 13 repetiert und die ursprünglich punktierten TFCI-Bits $c_{30}$ und $c_{31}$ auf den letzten Zeitschlitz Nr. 14 abgebildet sowie das TFCI-Bit $c_{08}$ im Zeitschlitz Nr. 14 repetiert.

Diese Vorgehensweise ist vorteilhaft, da es besser ist, die ehemals punktierten Bits des TFCI-(32,10)-Codeworts zu senden, als Bits zu repetieren, welche aufgrund der im "Compressed Mode" vorhandenen Übertragungslücke unter hinsichtlich der Leistungsregelung ("Power Control") schlechten Bedingungen gesendet wurden.

Das oben beschriebene Ausführungsbeispiel kann auch derart abgewandelt werden, daß die ursprünglich punktierten Bits nicht im letzten Zeitschlitz des UMTS-Rahmens plaziert werden, sondern direkt nach der Übertragungslücke gesendet werden.,Zudem werden wie beim Stand der Technik die dann der Übertragungslücke unmittelbar folgenden TFCI-Bits repetiert. Diese Vorgehensweise besitzt den Vorteil, daß die Bits, welche normalerweise ohnehin punktiert werden, auf den bezüglich der Übertragungsbedingungen "schlechten" TFCI-Stellen gesendet werden.

Gemäß diesem Ausführungsbeispiel würden ausgehend von dem im Fig. 3 gezeigten Beispiel zunächst die TFCI-Bits $c_{29}$ bis $c_{12}$ auf die ersten Zeitschlitze Nr. 0 bis Nr. 5 verteilt werden. Die TFCI-Stellen des Zeitschlitzes Nr. 9 werden mit den ursprünglich punktierten Bits $c_{30}$ und $c_{31}$ sowie dem TFCI-Bit $c_{11}$ besetzt. Die TFCI-Bits $c_{10}$ bis $c_2$ werden den Zeitschlitzen Nr. 10 bis 12 zugewiesen. Der Zeitschlitz Nr. 13 wird durch die TFCI-Bits $c_{01}$ und $c_0$ besetzt. Die dann immer noch zur Verfügung stehenden TFCI-Stellen in den Zeitschlitzen Nr. 13 und Nr. 14 werden, wie bereits beschrieben worden ist, durch die der Übertragungslücke unmittelbar folgenden TFCI-Bits besetzt, so daß das Bit $c_{30}$ im Zeitschlitz Nr. 13 und die Bits $c_{31}$, $c_{11}$, $c_{10}$ im Zeitschlitz Nr. 14 repetiert werden.

Es ist zu erwarten, daß die nach der Übertragungslücke gesendeten TFCI-Bits mit zunehmender Entfernung von der Übertragungslücke eine geringere Bitfehlerrate aufweisen, da sich die Leistungsregelung mit zunehmender Entfernung zu der Übertragungslücke wieder einschwingen kann. Eine weitere gute Möglichkeit für die Belegung der zur Verfügung stehenden TFCI-Stellen im "Compressed Mode" besteht daher darin, die unmittelbar nach der Übertragungslücke gesendeten TFCI-Bits, welche die größte Fehlerwahrscheinlichkeit aufweisen, in demjenigen Zeitschlitz zu repetieren, der die größte Entfernung zu der Übertragungslücke aufweist. Es ist somit vorteilhaft, die der Übertragungslücke unmittelbar folgenden TFCI-Bits in umgekehrter Reihenfolge (und nicht wie bisher in derselben Reihenfolge) zu repetieren.

Der eingangs beschriebene Algorithmus für die Bestimmung der repetierten Bits $d_k$ ändert sich dadurch folgendermaßen:

$$d_{D-31} = c_{(E-(D-31)) \bmod 30}$$

$$d_{D-32} = c_{(E-(D-32)) \bmod 30}$$

$$d_{D-33} = c_{(E-(D-33)) \bmod 30}$$

$$\cdot$$

$$\cdot$$

$$\cdot$$

$$d_1 = c_{(E-1) \bmod 30}$$

$$d_0 = c_{E \bmod 30}$$

Dies bedeutet für das in Fig. 3 gezeigte Beispiel, daß zunächst die TFCI-Bits $c_{29}$ bis $c_{12}$ auf die ersten Zeitschlitze Nr. 0 bis Nr. 5 und die TFCI-Bits $c_{11}$ bis $c_0$ auf die nächsten Zeitschlitze Nr. 9 bis Nr. 12 verteilt werden. Nachdem somit alle TFCI-Bits des punktierten TFCI-Codeworts aufgeteilt worden sind, werden die der Übertragungslücke dann unmittelbar folgenden TFCI-Bits in umgekehrter Reihenfolge repetiert, um die noch freien TFCI-Stellen zu besetzen, d.h. die TFCI-Bits

$c_{06}$, $c_{07}$, $c_{08}$ werden im Zeitschlitz Nr. 13 und die TFCI-Bits $c_{09}$, $c_{10}$, $c_{11}$ werden im Zeitschlitz Nr. 14 repetiert.

Besonders vorteilhaft ist die Kombination dieses Ausführungsbeispiels mit dem ersten Ausführungsbeispiel, d.h. die beiden ursprünglich punktierten TFCI-Bits $c_{30}$ und $c_{31}$ werden im letzten Zeitschlitz gesendet, während die der Übertragungslücke unmittelbar folgenden TFCI-Bits zur Belegung der freien TFCI-Stellen in umgekehrter Reihenfolge repetiert werden. Für die Bestimmung der Belegung der TFCI-Stellen $d_k$ ergibt sich demnach folgender Algorithmus:

$$d_{D-31} = c_{(E-(D-33)) \bmod 30}$$

$$d_{D-32} = c_{(E-(D-34)) \bmod 30}$$

$$.$$
$$.$$
$$.$$

$$d_2 = c_{E \bmod 30}$$

$$d_1 = c_{31}$$

$$d_0 = c_{30}$$

Für das in Fig. 3 gezeigte Beispiel bedeutet dies, daß zunächst die TFCI-Bits $c_{29}$ bis $c_{12}$ auf die ersten Zeitschlitze Nr. 0 bis Nr. 5 und die TFCI-Bits $c_{11}$ bis $c_0$ auf die nächsten Zeitschlitze Nr. 9 bis Nr. 12 verteilt werden. Nachdem somit alle TFCI-Bits des punktierten TFCI-Codeworts aufgeteilt worden sind, werden die der Übertragungslücke dann unmittelbar folgenden TFCI-Bits in umgekehrter Reihenfolge repetiert und die ursprünglich punktierten Bits $c_{30}$ und $c_{31}$ im letzten Zeitschlitz gesendet, um die noch freien TFCI-Stellen zu besetzen, d.h. die TFCI-Bits $c_{08}$, $c_{09}$, $c_{10}$ werden im Zeitschlitz Nr. 13 repetiert, während dem Zeitschlitz Nr. 14 die ursprünglich punktierten TFCI-Bits $c_{30}$ und $c_{31}$ sowie das repetierte TFCI-Bit $c_{11}$ zugewiesen werden.

Wie bereits beschrieben worden ist, werden im "Compressed Mode" üblicherweise die TFCI-Bits des zweifach punktierten TFCI-(32,10)-Codeworts auf die ersten TFCI-Stellen des jeweiligen Rahmens verteilt, während die dann noch zur Verfügung stehenden TFCI-Stellen durch Repetieren aufgefüllt werden. Stehen in Abhängigkeit von dem für den "Compressed Mode" jeweils gewählten Format (vgl. Fig. 4) mindestens 32 TFCI-Stellen zur Verfügung, besteht eine weitere Möglichkeit zum Belegen der TFCI-Stellen darin, gleich das gesamte unpunktierte (32,10)-Codewort zu senden und erst dann, falls noch TFCI-Stellen frei sind, diese durch Repetieren aufzufüllen. In diesem Fall würde das von dem Codierer 1 gelieferte TFCI-Codewort seine ursprüngliche Länge und Reihenfolge beibehalten, da - wie in Fig. 1 gestrichelt angedeutet ist - die Punktierung entfällt.

Für das in Fig. 3 gezeigte Beispiel bedeutet dies, daß zunächst die TFCI-Bits $c_{30}$ bis $c_{15}$, $c_{31}$ und $c_{14}$ auf die ersten Zeitschlitze Nr. 0 bis Nr. 5 und die TFCI-Bits $c_{13}$ bis $c_{02}$ auf die nächsten Zeitschlitze Nr. 9 bis Nr. 12 verteilt werden. Dabei ist zu beachten, daß $c_{30}$ das Bit Nr. 0 und $c_{31}$ das Bit Nr. 16 des von dem Codierer 1 ausgegebenen unpunktierten TFCI-Codeworts bezeichnet (in Fig. 2 ist lediglich das punktierte TFCI-Codewort dargestellt). Im Zeitschlitz Nr. 13 werden zunächst die noch verbleibenden TFCI-Bits $c_{01}$ und $c_0$ gesendet. Die dann noch freien TFCI-Stellen des Zeitschlitzes Nr. 13 und des Zeitschlitzes Nr. 14 werden durch Repetieren belegt, wobei für das Repetieren wieder die zuvor beschriebenen Ausführungsbeispiele angewendet werden können. Im vorliegenden Fall werden wieder die der Übertragungslücke unmittelbar folgenden TFCI-Bits repetiert, so daß im Zeitschlitz Nr. 13 das TFCI-Bit $c_{13}$ repetiert wird, während im Zeitschlitz Nr. 14 die TFCI-Bits $c_{12}$ bis $c_{10}$ repetiert werden.

Im Folgenden werden zunächst Ausführungsbeispiele der vorliegenden Erfindung für die Belegung der im "Compressed Mode" zur Verfügung stehenden TFCI-Stellen für den Downlink erläutert.

Wie zuvor erläutert worden ist, können hierzu sogenannte DTX-Bits verwendet werden.

Gemäß einem Ausführungsbeispiel der vorliegenden Erfindung wird nunmehr vorgeschlagen, diese DTX-Bits nicht am Ende des jeweiligen Rahmens auf die nach dem Senden des punktierten TFCI-Codeworts überschüssigen TFCI-Stellen zu verteilen, sondern diese DTX-Bits unmittelbar nach der im "Compressed Mode" auftretenden Übertragungslücke zu senden. D.h. es werden unmittelbar nach der Übertragungslücke so viele DTX-Bits gesendet, wie überschüssige TFCI-Stellen in dem Rahmen vorhanden sind. Die restlichen TFCI-Stellen des Rahmens werden mit den Bits des punktierten TFCI-Codeworts belegt.

Diese Vorgehensweise weist den Vorteil auf, daß die DTX-Bits für diejenigen TFCI-Stellen verwendet werden, für welche die Wahrscheinlichkeit einer gestörten Übertragung aufgrund ihrer Nähe zu der Übertragungslücke am größten ist.

Wird, wie in Fig. 3 gezeigt ist, ein Rahmen mit einer drei Zeitschlitze umfassenden Übertragungslücke übertragen, bedeutet dies (beispielhaften für einen Spreizfaktor von 256) gemäß der in Fig. 5A gezeigten Tabelle, daß pro Zeitschlitz vier TFCI-Stellen zur Verfügung stehen (die Downlink-Rahmenstruktur soll vom Typ A sein). Gemäß dem zuvor beschriebenen Ausführungsbeispiel werden demnach die TFCI-Bits $c_{29}$ bis $c_{06}$ des punktierten TFCI-Codeworts auf die Zeitschlitze Nr. 0 bis Nr. 5 verteilt. In den Zeitschlitzen Nr. 9 bis Nr. 12 werden 16 DTX-Bits gesendet, während im Zeitschlitz Nr. 13 zunächst zwei DTX-Bits und anschließend die TFCI-Bits $c_{05}$ und $c_{04}$ gesendet werden. Im letzten Zeitschlitz Nr. 14 werden schließlich die restlichen TFCI-Bits $c_{03}$ bis $c_0$ des punktierten TFCI-Codeworts gesendet.

Sollten nach der Übertragungslücke weniger Zeitschlitze vorhanden sein als man für die DTX-Bits benötigt, können die nicht nach der Übertragungslücke übertragbaren DTX-Bits den Zeitschlitzen vor der Übertragungslücke zugeordnet werden. Dabei kann die Verteilung im Prinzip beliebig erfolgen, wobei eine möglichst gleichmäßige Verteilung der DTX-Bits vorteilhaft ist. Als weitere Ausführungsvariante kann auch lediglich ein Teil der DTX-Bits unmittelbar nach der Übertragungslücke eingefügt werden, wobei die restlichen DTX-Bits auf die übrigen Zeitschlitze vor und nach der Übertragungslücke aufgeteilt werden. Dies ist insbesondere dann vorteilhaft, wenn nach der Übertragungslücke mehr Zeitschlitze zur Verfügung stehen, als für das Einschwingen der Leistungsregelung ("Power Control") erforderlich ist.

Eine spezielle Ausführungsvariante der Erfindung sieht vor, daß im Komprimiermodus zunächst 30 Bits des TFCI-Codeworts auf den zu sendenen Rahmen abgebildet werden. Außerdem werden zwei ursprünglich punktierte Bits bzw. zwei im Normalmodus (im normalen Betrieb bzw im Nicht-Komprimier-Modus) nicht zu sendende Bits auf den zu sendenen Rahmen abgebildet. Überschreitet insbesondere im Uplink die Anzahl der in dem entsprechenden komprimierten Rahmen zur Verfügung stehenden Formatkennungs-Stellen die Grenze von 32 Formatkennungs-Stellen, so werden TFCI-Bits wiederholt auf den zu sendenden Rahmen abgebildet; insbesondere werden die TFCI-Bits, welche kurz nach der Übertragungslücke gesendet werden, wiederholt auf den zu sendenden Rahmen abgebildet werden (repetiert werden). Diese wiederholte Abbildung findet dabei insbesondere in relativ zur ersten Abbildung dieser TFCI-Bits umgekehrter Reihenfolge statt.

Überschreitet insbesondere im Downlink die Anzahl der in dem entsprechenden komprimierten Rahmen zur Verfügung stehenden Formatkennungs-Stellen die Grenze von 32 Formatkennungs-Stellen, so werden wiederholt DTX-Bits auf den zu sendenden Rahmen abgebildet.

Abschließend sei nochmals darauf hingewiesen, daß die zuvor anhand des Uplinks beschriebenen Ausführungsbeispiele grundsätzlich auch auf den Downlink anwendbar sind. Des weiteren wurde die vorliegende Erfindung zuvor anhand der Verwendung in einem Mobilfunksender beschrieben. Selbstverständlich kann die Erfindung jedoch auch auf Mobilfunkempfänger ausgedehnt werden, welche entsprechend zum Empfangen und Auswerten eines erfindungsgemäß verarbeiteten und anschließend gesendeten Signals auszugestalten sind.

**Patentansprüche**

**1.** Verfahren zum Abbilden von Formatkennungs-Bits auf einen in einem Komprimiermodus zu sendenden Rahmen,

wobei die innerhalb eines im Komprimiermodus zu sendenden Rahmens enthaltenen Informationen derart zeitlich komprimiert gesendet werden, daß innerhalb dieses komprimierten Rahmens eine nicht mit Informationen belegte Übertragungslücke vorhanden ist,

wobei die Formatkennungs-Bits im Komprimiermodus auf eine bestimmte Anzahl an in dem entsprechenden komprimierten Rahmen zur Verfügung stehende Formatkennungs-Stellen abgebildet werden, welche größer als die Anzahl der Formatkennungs-Bits ist, wobei nach einem ersten Abbilden der Formatkennungs-Bits auf entsprechende Formatkennungs-Stellen die <u>unmittelbar</u> der Übertragungslücke folgenden Formatkennungs-Bits wiederholt abgebildet werden, um sämtliche Formatkennungs-Stellen mit einem Formatkennungs-Bit zu belegen,

**dadurch gekennzeichnet,**

**daß** nach dem ersten Abbilden der Formatkennungs-Bits die <u>unmittelbar</u> der Übertragungslücke folgenden Formatkennungs-Bits in umgekehrter Reihenfolge wiederholt abgebildet werden, um die nach dem ersten Abbilden noch unbelegten Formatkennungs-Stellen des komprimierten Rahmens mit einem Formatkennungs-Bit zu belegen.

**2.** Verfahren nach Anspruch 1,
**dadurch gekennzeichnet,**
**daß** während des ersten Abbildens die Formatkennungs-Bits auf die zeitlich zuerst zu sendenden Formatkennungs-Stellen des komprimierten Rahmens abgebildet werden.

**3.** Verfahren nach Anspruch 2,
**dadurch gekennzeichnet,**
**daß** während des ersten Abbildens die Formatkennungs-Bits entsprechend ihrer Wertigkeit auf die entsprechenden Formatkennungs-Stellen des komprimierten Rahmens abgebildet werden, wobei das höherwertigste Formatkennungs-Bit auf die zeitlich zuerst zu sendende Formatkennungs-Stelle des komprimierten Rahmens abgebildet wird.

**4.** Verfahren nach einem der vorhergehenden Ansprüche,
**dadurch gekennzeichnet,**
**daß** das Verfahren vor dem Senden des komprimierten Rahmens über eine Uplink-Verbindung in einem Funksystem, insbesondere einem UMTS-Mobilfunksystem, durchgeführt wird.

**5.** Verfahren nach einem der Ansprüche 1-3,
**dadurch gekennzeichnet,**
**daß** das Verfahren vor dem Senden des komprimierten Rahmens über eine Downlink-Verbindung in einem Funksystem, insbesondere einem UMTS-Mobilfunksystem, durchgeführt wird.

6. Codiereinrichtung zum Abbilden von Formatkennungs-Bits auf einen in einem Komprimiermodus zu sendenden Rahmen, die derart eingerichtet ist, daß die innerhalb eines im Komprimiermodus zu sendenden Rahmens enthaltenen Informationen derart zeitlich komprimiert gesendet werden, daß innerhalb dieses komprimierten Rahmens eine nicht mit Informationen belegte Übertragungslücke vorhanden ist,
die Formatkennungs-Bits im Komprimiermodus auf eine bestimmte Anzahl an in dem entsprechenden komprimierten Rahmen zur Verfügung stehende Formatkennungs-Stellen abgebildet werden, welche größer als die Anzahl der Formatkennungs-Bits ist,
daß nach einem ersten Abbilden der Formatkennungs-Bits auf entsprechende Formatkennungs-Stellen die unmittelbar der Übertragungslücke folgenden Formatkennungs-Bits wiederholt abgebildet werden, um sämtliche Formatkennungs-Stellen mit einem Formatkennungs-Bit zu belegen,
**dadurch gekennzeichnet,**
**daß** nach dem ersten Abbilden der Formatkennungs-Bits die unmittelbar der Übertragungslücke folgenden Formatkennungs-Bits in umgekehrter Reihenfolge wiederholt abgebildet werden, um die nach dem ersten Abbilden noch unbelegten Formatkennungs-Stellen des komprimierten Rahmens mit einem Formatkennungs-Bit zu belegen.

## Claims

1. Method for mapping format identification bits onto a frame which is to be transmitted using a compressed mode,
with the information contained within a frame which is to be transmitted using the compressed mode being sent compressed in time such that there is a transmission gap, which is not filled with information, within this compressed frame,
with the format identification bits in the compressed mode being mapped onto a specific number of format identification points which are available in the corresponding compressed frame, with this number being greater than the number of format identification bits, wherein after first mapping of the format identification bits onto corresponding format identification points, the format identification bits directly following the transmission gap are mapped repeatedly in order to fill all the format identification points with a format identification bit,
**characterized in that**, after first mapping of the format identification bits, the format identification bits directly following the transmission gap are mapped repeatedly in the reverse sequence, in order to fill those format identification points which are still unfilled in the compressed frame after the first mapping process with a format identification bit.

2. Method according to Claim 1,
**characterized**
**in that**, during the first mapping process, the format identification bits are mapped onto those format identification points in the compressed frame which are to be transmitted first in time.

3. Method according to Claim 2,
**characterized**
**in that**, during the first mapping process, the format identification bits are mapped in accordance with their significance onto the corresponding format identification points in the compressed frame, with the most significant format identification bit being mapped onto that format identification point which is to be transmitted first in time in the compressed frame.

4. Method according to one of the preceding claims,
**characterized**
**in that** the method is carried out before the transmission of the compressed frame via an uplink connection in a radio system, in particular a UMTS mobile radio system.

5. Method according to one of Claims 1 to 3,
**characterized**
**in that** the method is carried out before the transmission of the compressed frame via a downlink connection in a radio system, in particular a UMTS mobile radio system.

6. Coding device for mapping format identification bits onto a frame which is to be transmitted using a compressed mode, which is configured such that the information contained within a frame which is to be transmitted using the compressed mode is sent compressed in time such that there is a transmission gap, which is not filled with information, within this compressed frame,
the format identification bits in the compressed mode are mapped into a specific number of format identification points which are available in the corresponding compressed frame, with this number being greater than the number of format identification bits, after a first mapping of the format identification bits onto corresponding format identification points, the format identification bits directly following the transmission gap are mapped repeatedly in order to fill all the format identification points with a format identification bit,
**characterized in that**, after the first mapping of the format identification bits, the format identification

bits <u>directly</u> following the transmission gap are mapped repeatedly in the reverse sequence, in order to fill those format identification points which are still unfilled in the compressed frame after the first mapping process with a format identification bit.

## Revendications

1. Procédé de reproduction de bits d'identification de format sur une trame devant être transmise en mode comprimé,

   les informations contenues dans une trame devant être transmise en mode comprimé étant émises de manière comprimée dans le temps, de manière à ce qu'un interstice de transmission non occupé par des informations soit présent au sein de cette trame comprimée,

   les bits d'identification de format étant reproduits en mode comprimé, sur une quantité définie de zones d'identification de format disponibles dans la trame comprimée correspondante, qui est supérieure à la quantité de bits d'identification de format, après une première reproduction des bits d'identification de format sur des zones d'identification de format correspondantes, les bits d'identification de format directement consécutifs à l'interstice de transmission étant reproduits une fois de plus, pour occuper toutes les zones d'identification de format avec un bit d'identification de format,
   **caractérisé en ce que**
   après la première reproduction des bits d'identification de format, les bits d'identification de format directement consécutifs à l'interstice de transmission sont reproduits une fois de plus dans l'ordre inverse, pour occuper avec un bit d'identification de format les zones d'identification de format de la trame comprimée qui restent encore inoccupées.

2. Procédé selon la revendication 1,
   **caractérisé en ce que**
   pendant la première reproduction, les bits d'identification de format sont reproduits sur les zones d'identification de format de la trame comprimée qui doivent être émises en premier lieu.

3. Procédé selon la revendication 2,
   **caractérisé en ce que**
   pendant la première reproduction, les bits d'identification de format sont reproduits en fonction de leur valence sur les zones d'identification de format correspondantes de la trame comprimée, le bit d'identification de format possédant la plus grande valeur étant reproduit sur la zone d'identification de format de la trame comprimée qui doit être envoyée en premier lieu.

4. Procédé selon l'une quelconque des revendications précédentes,
   **caractérisé en ce que**
   avant l'émission de la trame comprimée, le procédé est réalisé par l'intermédiaire d'une liaison ascendante au sein d'un système d'émission radioélectrique, en particulier un système d'émission radioélectrique mobile UMTS.

5. Procédé selon l'une quelconque des revendications 1 - 3,
   **caractérisé en ce que**
   avant l'émission de la trame comprimée, le procédé est réalisé par l'intermédiaire d'une liaison descendante au sein d'un système d'émission radioélectrique, en particulier un système d'émission radioélectrique mobile UMTS.

6. Dispositif de codage pour la reproduction de bits d'identification de format sur une trame devant être transmise en mode comprimé, lequel est conçu de manière à ce que

   les informations comprises dans une trame devant être transmise en mode comprimé soient émises de manière comprimée dans le temps pour qu'à l'intérieur de cette trame comprimée, un interstice de transmission non occupé par des informations soit présent,

   les bits d'identification de format soient reproduits en mode comprimé sur une certaine quantité de zones d'identification de format disponibles dans la trame comprimée qui est supérieure à la quantité de bits d'identification de format

   après une première reproduction des bits d'identification de format sur des zones d'identification de format, les bits d'identification de format directement consécutifs à l'interstice de transmissions soient reproduits une fois de plus, pour occuper toutes les zones d'indentification de format avec un bit d'identification de format,
   **caractérisé en ce que**
   après la première reproduction des bits d'identification de format, les bits d'identification de format directement consécutifs à l'interstice de transmission sont reproduits une fois de plus dans l'ordre inverse, pour occuper avec un bit d'identification de format les zones d'identification de format de la trame comprimée restant encore inoccupées.

## FIG 1

## FIG 2

# FIG 3

Übertragungslücke

| 0 | 1 | 2 | 3 | 4 | 5 | | 9 | 10 | 11 | 12 | 13 | 14 |

komprimierter UMTS-Rahmen

# FIG 4

| Übertragene Slots | TFCI-Bits pro Slot ($N_{TFCI}$) | TFCI-Bits pro Rahmen (D) |
|---|---|---|
| 15 | 2 | 30 |
| 14 | 3 | 42 |
| 13 | 3 | 39 |
| 12 | 3 | 36 |
| 11 | 3 | 33 |
| 10 | 3 | 30 |
| 9 | 4 | 36 |
| 8 | 4 | 32 |

# FIG 5A

| Übertragene Slots | TFCI-Bits pro Slot ($N_{TFCI}$) | TFCI-Bits pro Rahmen (D) TYP A | TFCI-Bits pro Rahmen (D) TYP B |
|---|---|---|---|
| 15 | 2 | 30 | 32 |
| 14 | 4 | 56 | 60 |
| 13 | 4 | 52 | 56 |
| 12 | 4 | 48 | 52 |
| 11 | 4 | 44 | 48 |
| 10 | 4 | 40 | 44 |
| 9 | 2+2 | 36 | 38 |
| 9 | 4 | 36 | 40 |
| 8 | 2+2 | 32 | 34 |
| 8 | 4 | 32 | 36 |

# FIG 5B

| Übertragene Slots | TFCI-Bits pro Slot ($N_{TFCI}$) | TFCI-Bits pro Rahmen (D) TYP A | TFCI-Bits pro Rahmen (D) TYP B |
|---|---|---|---|
| 15 | 8 | 120 | 128 |
| 14 | 16 | 224 | 240 |
| 13 | 16 | 208 | 224 |
| 12 | 16 | 192 | 208 |
| 11 | 16 | 176 | 192 |
| 10 | 16 | 160 | 176 |
| 9 | 16 | 144 | 160 |
| 8 | 16 | 128 | 144 |